**Europäisches Patentamt**

**European Patent Office**

**Office européen des brevets**

(19)

(11)  **EP 1 484 925 A2**

(12)  **EUROPEAN PATENT APPLICATION**

(43) Date of publication:
**08.12.2004   Bulletin 2004/50**

(51) Int Cl.$^7$: **H04N 7/26**

(21) Application number: **04013202.9**

(22) Date of filing: **04.06.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority:  **04.06.2003   KR 2003036084**

(71) Applicant: **Samsung Electronics Co., Ltd.**
**Suwon-si, Gyeonggi-do 442-742 (KR)**

(72) Inventor: **Kwon, Seong-Geun**
**Yeongtong-gu Suwon-si Gyeonggi-do (KR)**

(74) Representative: **Lang, Johannes, Dipl.- Ing.**
**Paten-und Rechtsanwälte,**
**Bardehle Pagenberg Dost Altenberg Geissler**
**Galileiplatz 1**
**81679 München (DE)**

(54)  **Method and device for compressing image data**

(57)  A device and method for compressing image data is disclosed. The device and method comprises a block dividing section for dividing each frame of the image data into a plurality of blocks; a block determining section for determining the types of divided blocks; and a compressing section for performing compression according to the types of divided blocks. The block types include motion blocks, static blocks and refresh blocks that avoid the accumulation of errors between frames.

FIG.3

EP 1 484 925 A2

**Description**

**BACKGROUND OF THE INVENTION**

Field of the Invention

The present invention relates to compression of image data. More particularly, the present invention relates to a device and a method by which image data can be effectively compressed.

Description of the Related Art

Motion Joint Photographic Expert Group (M-JPEG) is an industry standard for the compression of a moving image and is based on a Joint Photographic Expert Group (JPEG) format which was used for compressing a still image. M-JPEG is widely used in digital video editing and supports a variable compression factor, that is, it enables a compression factor to be freely established. In M-JPEG, each frame comprising a moving image is compressed and reproduced to a JPEG format.

Since M-JPEG compresses image data using only a spatial compression method, frames are easy to access and thus digital video editing can be performed efficiently. M-JPEG Hardware supporting real-time compression has been released in the market. Because M-JPEG compresses objective image data regardless of the relationship of the current frame and the previous frame, unlike Moving Picture Expert Group (MPEG), each frame can be freely edited even after compression is performed. In addition, since M-JPEG does not use interframe information, it does not transfer a transmission error into the next frame. Also, in M-JPEG, since each frame is separately transmitted, it is possible to use a variable bandwidth, depending on network usage. In addition, an image quality superior to MPEG is provided.

Although software methods using a high-performance Central Processing Unit (CPU) have recently been introduced, compression methods using a hardware chipset have a disadvantage in that it is impossible for even the same M-JPEG methods to be used compatibly when a chipset and a driver are different from each other. Since M-JPEG does not use interframe information, M-JPEG has a lower compression factor than MPEG, thereby requiring a wide bandwidth. Additionally, M-JPEG is more difficult to implement than MPEG for voice synchronization and requires a high-performance CPU.

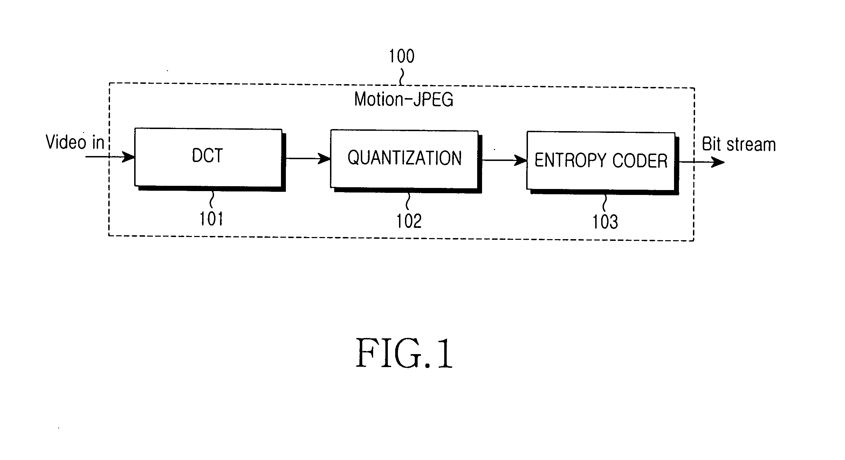

FIG. 1 is a block diagram illustrating a conventional M-JPEG encoder.

Referring to FIG. 1, M-JPEG 100 includes a discrete cosine transform (hereinafter, referred to as "DCT") section 101, a quantization section 102, and an entropy coder 103. The DCT section 101 processes input images with each input image divided by a block which comprises 8x8 pixels. That is, by using a cosine signal as a basis function with respect to each block, image signals generally having a very high correlation among adjacent pixels are converted into frequency ranges having no correlation between each other. Therefore, DCT coefficients representing low-frequency components have large values, while DCT coefficients representing high-frequency components have very small values.

The quantization section 102 reduces the number of effective bits, by dividing a DCT coefficient obtained through the DCT section 101 using a quantization coefficient according to each frequency. Therefore, high-frequency coefficients having relatively small values become nearly zero through quantization.

The entropy coder 103 creates a bit string formed with "0" and "1" from values of DCT frequency coefficients having undergone the quantization step, in consideration of these generation probabilities. That is, the entropy coder 103 codes components in which spatial duplication is eliminated by the DCT and the quantization.

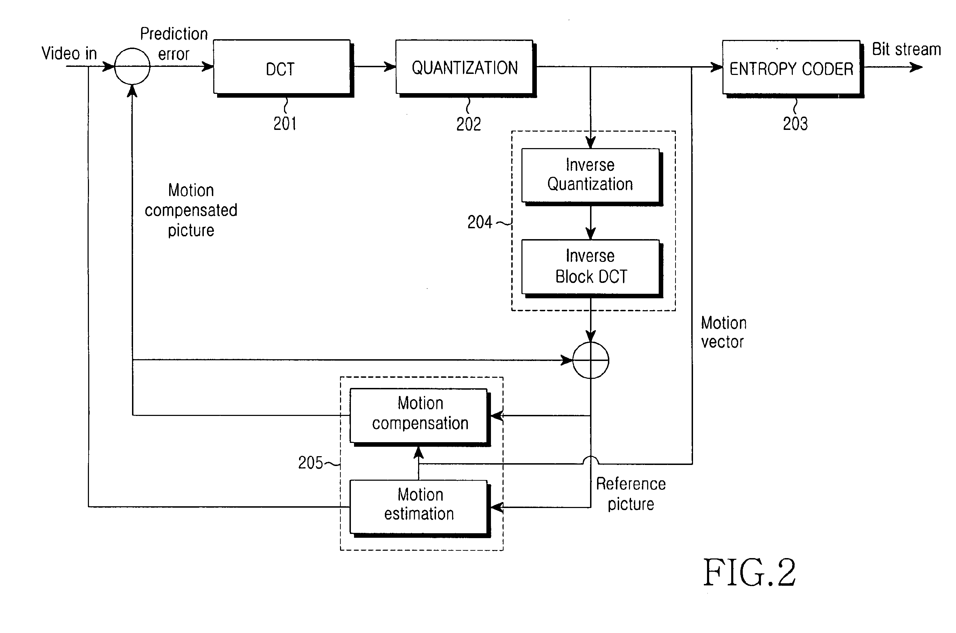

FIG. 2 is a block diagram illustrating a conventional video encoder, that is, an MPEG encoder. MPEG has a very high compression factor, that is, a very low bit rate, as compared with M-JPEG. However, an MPEG encoder has a disadvantage in that it takes an excessive amount of time for compression because a motion estimation and compensation section 205 and an inverse DCT section 204 for performing a decoding step are included. Also, there is another disadvantage in that errors are accumulated because of interframe coding which is used to eliminating time duplication among frames.

It should be appreciated by those skilled in the art that DCT 201, Quantization block 202 and entropy coder 203 are similar in operation to that DCT 101, Quantization block 102 and entropy coder 103. Therefore, a description is not required.

**SUMMARY OF THE INVENTION**

Accordingly, the present invention has been made to solve the above-mentioned problems occurring in the prior art, and an object of the present invention is to provide a compression device and a compression method capable of preventing an error from being accumulated, while reducing the size of image data and increasing a compression factor.

To accomplish this object, in accordance with one aspect of the present invention, a device for compressing image data is provided. The device comprises a block dividing section for dividing each frame of the image data into a plurality of blocks; a block determining section for determining the types of divided blocks; and a compressing section for performing compression according to the types of divided blocks.

In accordance with another aspect of the present invention, a method for compressing image data is provided. The method comprises dividing each frame of received image data into a plurality of blocks; determining the types of divided blocks; compressing a value of a present block when the present block is determined to be a refresh block; compressing a value of a present block when the present block is determined to be a motion block; and compressing a difference between blocks when the present block is determined to be a static block.

**BRIEF DESCRIPTION OF THE DRAWINGS**

The above and other objects, features and advantages of the present invention will be more apparent from the following detailed description taken in conjunction with the accompanying drawings, in which:

FIG. 1 is a block diagram illustrating a conventional Motion - Joint Photographic Expert Group (M-JPEG) encoder;

FIG. 2 is a block diagram illustrating a conventional video encoder;

FIG. 3 is a view illustrating refresh columns established in frames of image data according to an embodiment of the present invention;

FIG. 4 is a block diagram illustrating a compression encoder according to an embodiment of the present invention;

FIG. 5 is a flowchart for illustrating a compression process according to an embodiment of the present invention;

FIGs. 6A through 6E are views and diagrams illustrating results of image data compressed according to the process shown in FIG. 5;

FIGs. 7A through 7E are views and diagrams illustrating results of image data compressed according to the process shown in FIG. 5; and

FIGs. 8A through 8E are views and diagrams illustrating results of image data compressed according to the process shown in FIG. 5.

In the drawings, the same or similar elements are denoted by the same reference numerals even though they are depicted in different drawings.

**DETAILED DESCRIPTION OF THE PREFERRED EMBODIMENTS**

A device and a method for compressing image data according to embodiments of the present invention will be described with reference to the accompanying drawings. Although a number of specific features, such as the type of blocks, a reference value, location of refresh columns, a size of blocks, and so on, are given as examples, they are presented to provide a better understanding of the present invention only. Also, it should be clear to those skilled in the art that the present invention can be practiced without the specific exemplary features. In the following description of embodiments of the present invention, a detailed description of known functions and configurations incorporated herein will be omitted for conciseness.

Regarding an embodiment of the present invention, a "motion block" refers to a block in which an energy difference between the present block and a corresponding block in the previous frame is larger than a predetermined reference value. That is, a motion block has a change of image from the previous block. Also, a "static block", as opposed to a motion block, refers to an energy difference between the present block and the corresponding block in the previous frame that is smaller than a predetermined reference value. A static block represents a block in which the difference between the present block and the corresponding block in the previous frame is determined to be minimal.

In addition, a "refresh block" refers to a block existing in a refresh column, wherein the refresh column is used to prevent errors from being accumulated. In general, a moving image coder includes a decoder. That is, in a practical coding, in order to reduce the amount of information to be transmitted, coding is performed after a difference between the present and the previous frame is obtained.

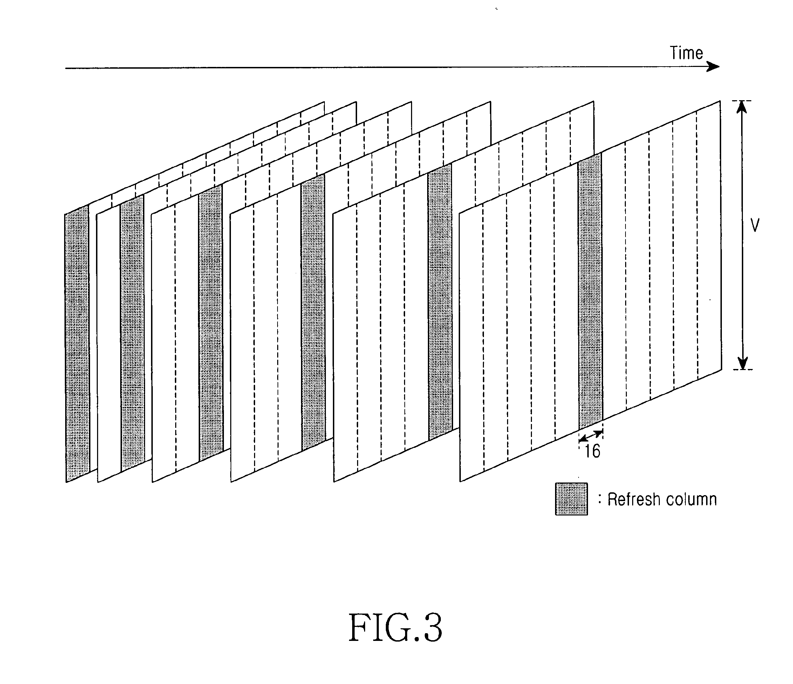

In order to simplify hardware construction, the present invention omits the above-mentioned decoding process and calculates a difference between the present frame to be coded and the previous frame in the original moving image. Errors may be accumulated in a decoder which does not have information of the previous frame of the original moving image. Therefore, in order to prevent such a problem, an embodiment of the present invention includes an intra-coding process, which does not use a difference between frames, with respect to refresh blocks located within the refresh column. That is, in an embodiment of the present invention, in order to prevent accumulation of errors caused in the static blocks, each of which is coded with a difference calculated between the present block to be coded and a corresponding block in the previous frame of the original moving image, a refresh column is periodically established for each frame, and the intra-coding is performed with respect to blocks located within the refresh column, regardless of whether the respective blocks in the refresh column is a motion block or a static block. FIG. 3 is a diagram illustrating refresh columns established in frames of image data according to an embodiment of the present invention. A location of a refresh column is predetermined every frame input into a compression encoder according to an embodiment of the present invention. A horizontal and a vertical size of the refresh column are preferably 16 and "V" pixels, respectively, wherein "V" represents a vertical size of an image.

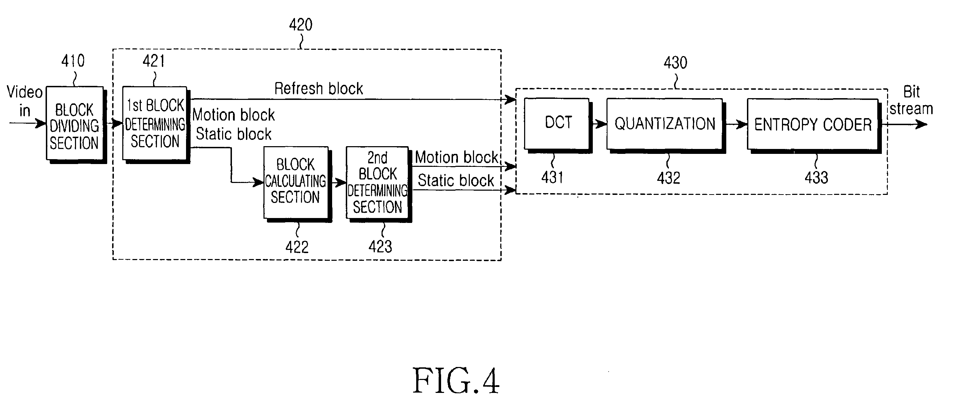

FIG. 4 is a block diagram illustrating a compression encoder according to an embodiment of the present invention.

Referring to FIG 4, the compression encoder according to the present invention includes a block dividing section 410, a block determining section 420, and a compressing section 430. The block dividing section 410 divides each frame of received image data into blocks, each of which preferably has a size of 8x8 pixels.

The block determining section 420 includes a first block determining section 421, a block calculating section 422, and a second block determining section 423. The first block determining section 421 determines whether or not the respective divided blocks are located within a refresh column. If a divided block is located within the refresh column, the divided block is determined to be a refresh block. In contrast, if a divided block is not located within the refresh column, the divided block is determined to be either a motion block or a static block. In addition, with respect to any present block determined to be a refresh block, the block determining section 420 transfers a value of only the refresh block to the compressing section 430, without calculating a difference between the present block and a corresponding block in the previous frame.

In contrast, when the first block determining section 421 determines a block to be either a motion block or a static block, the block calculating section 422 calculates a difference between the block and a corresponding block in the previous frame by means of equation 1, and then transfers the difference to the second block determining section 423.

Equation 1

$$\sum_{i=0}^{B-1}\sum_{j=0}^{B-1}(f_n(i,j) - f_{n-1}(i,j))^2$$

where $f_n(i,j)$ represents a pixel value of a position (i,j) in an $n^{th}$ frame, and $f_{n-1}(i,j)$ represents a pixel value of a position (i,j) in an (n-1)$^{th}$ frame.

The second block determining section 423 compares the difference between the blocks, which is received from the block calculating section 422, with a predetermined reference value. If the difference between the blocks is more than the predetermined reference value, the second block determining section 423 determines the present block to be a motion block and transfers only a value of the present block to the compressing section 430. Also, if the difference between the present block and the corresponding block in the previous frame is equal to or less than the predetermined reference value, the second block determining section 423 determines the present block to be a static block and transfers the difference between the blocks to the compressing section 430.

The compressing section 430 includes a discrete cosine transform (hereinafter, referred to as "DCT") section 431, a quantization section 432, and an entropy coder 433. The compressing section 430 codes either a value of a block or a difference between a present block and a corresponding block in the previous frame, which is input according to the properties of a refresh block, a motion block, and a static block that was determined by the block determining section 420. Each block is coded as either a refresh block or a motion block, while different components between a present block and a corresponding block within the previous frame are encoded with respect to each block being defined as a static block.

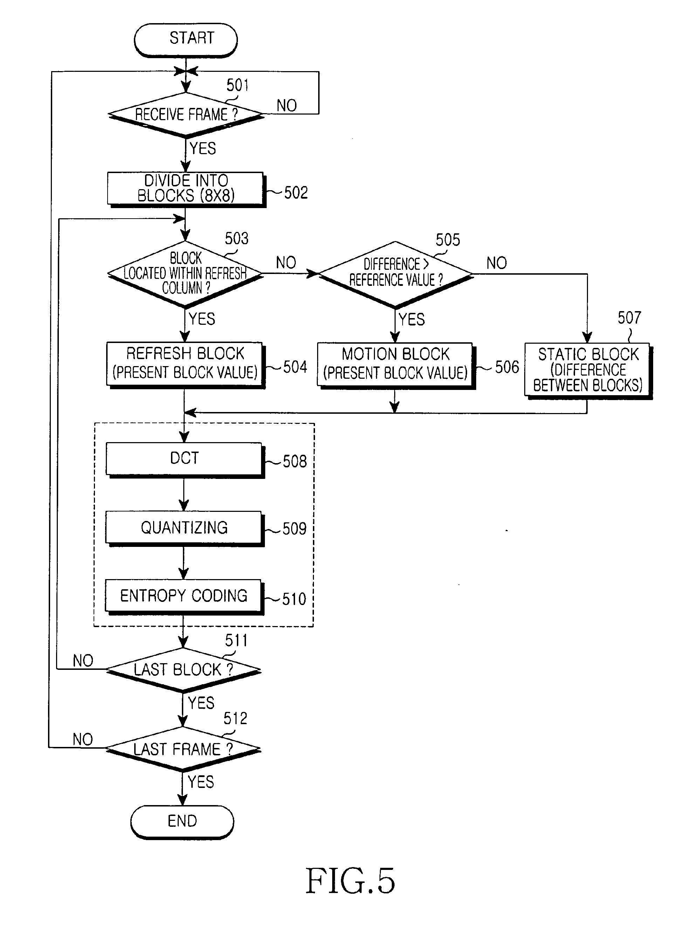

FIG 5 is a flowchart illustrating a compression process according to an embodiment of the present invention. Hereinafter, an embodiment of the present invention will be described in detail with reference to FIG 4.

Referring to FIG. 5, when a frame of image data is received, a controller detects this at step 501 and controls the block dividing section 410 to divide the frame into blocks of a predetermined size at step 502. For illustrative purposes, it is assumed that the predetermined size of each block is 8x8 pixels. The first block determining section 421 determines whether or not a divided present block is located within a refresh column. If the present block is located within the refresh column, the first block determining section 421 detects this at step 503 and transfers the value of the present block to the compressing section 430 without calculating a difference between the present block and the previous block at step 504.

In contrast, if the present block is not located within the refresh column, the first block determining section 421 detects this at step 503 and determines the present block to be either a motion block or a static block. Then, the block calculating section 422 calculates a difference between the present block and the previous block and then transfers the calculated difference to the second block determining section 423. The second block determining section 423 compares the difference between the blocks with a predetermined reference value. If the difference is more than the predetermined reference value, the second block determining section 423 determines the present block to be a motion block at step 505 and transfers only the value of the present block at step 506. In contrast, if the difference is less than the predetermined reference value, the second block determining section 423 determines the present block to be a static block at step 505 and transfers only the difference between the blocks at step 507.

Blocks transferred through steps 504, 505, and 506 undergo steps 508, 509, and 510 in sequence. At step 508, the block is converted from a spatial region to a frequency range by means of 64 DCT functions provided by the DCT section 431.

At step 509, 64 DCT coefficients obtained though the DCT is divided by a quantization coefficient value by the quantization section 432, thereby reducing the number of effective bits. At step 510, the quantized DCT coefficients are coded in a bit form including '0' and '1' according to these probability distributions by the entropy coder 433.

If the block coded through step 510 is not the last block in a frame, the controller detects this at step 511 and returns to step 503. In contrast, if the block coded through step 510 is the last block in a frame, the controller detects this at step 511 and then determines whether or not the present frame is the last frame. If the present frame is not the last frame, the controller detects this at step 512 and returns to step 501. In contrast, if the present frame is the last frame, the controller detects this at step 512 and ends the compressing process.

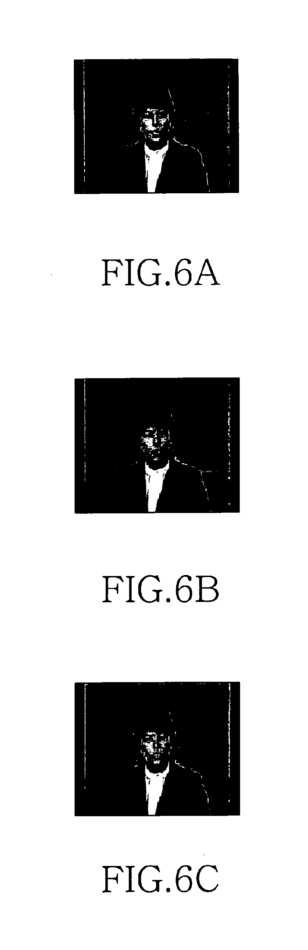

FIGs. 6A through 6E, 7A through 7E, and 8A through 8E are views and diagrams for showing results of image data compressed according to the process shown in FIG. 5.

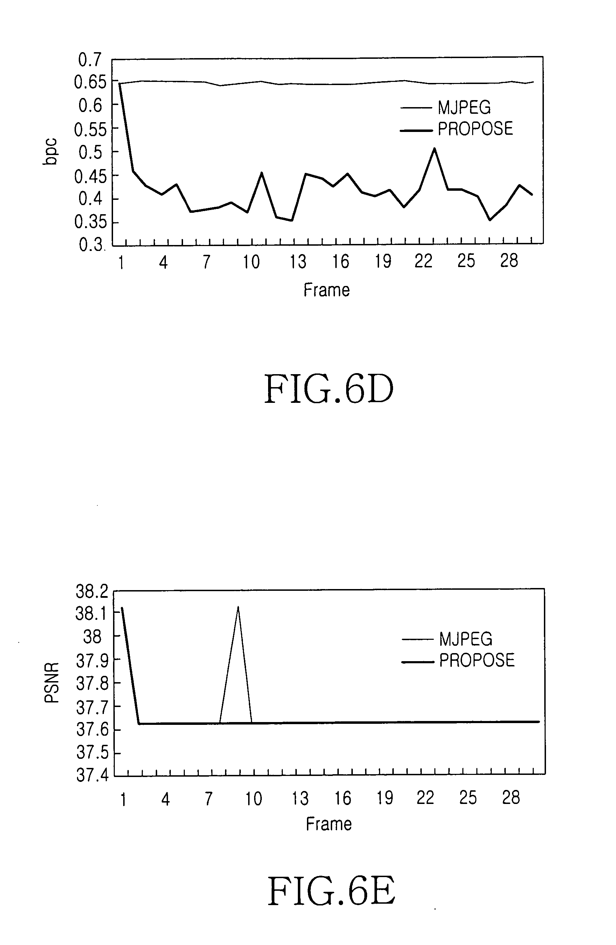

FIG. 6A shows an original image, and FIG. 6B shows an image having undergone conventional M-JPEG. FIG. 6C shows an image having undergone a compression method according to an embodiment of the present invention, and FIG. 6D shows a graph representing bit transmission rates of the images shown in FIGs. 6B and 6C. As shown in the above drawing, it should be understood that the image according to an embodiment of the present invention has a lower bit rate than the image having undergone the conventional M-JPEG. FIG. 6E shows a graph representing image qualities of the images shown in FIGs. 6B and 6C. In FIG. 6E, peak to peak signal noise ratio (PSNR) is a criterion for representing image quality of an image. Equation 2 is used to calculate the PSNR.

Equation 2

$$PSNR = 10\log\frac{255^2}{\frac{1}{HV}\sum_{i=0}^{H-1}\sum_{j=0}^{V-1}\left|I_n(i,j) - \hat{I}_n(i,j)\right|^2}$$

where $I_n(i,j)$ represents a pixel value of an original image, $I_{n-1}(i,j)$ represents a pixel value of a reproduced image, H represents a horizontal size of the image, and V represents a vertical size of the image.

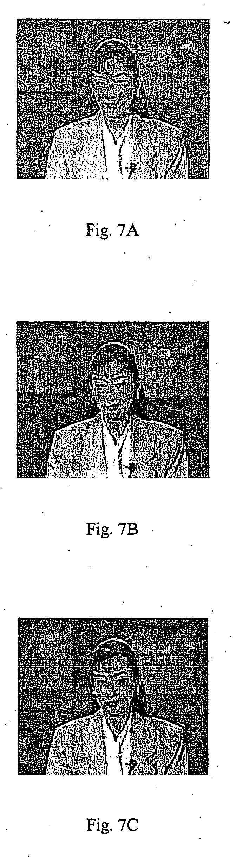

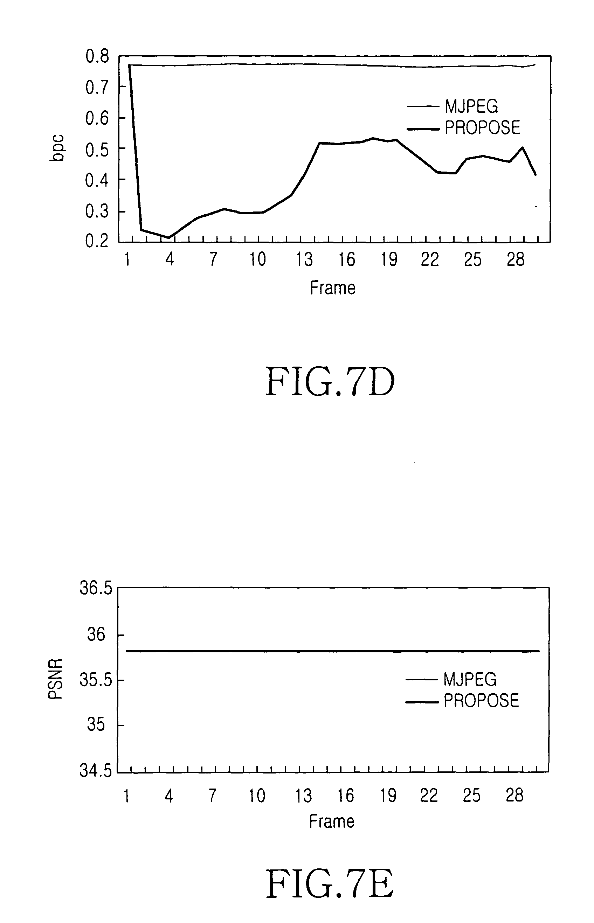

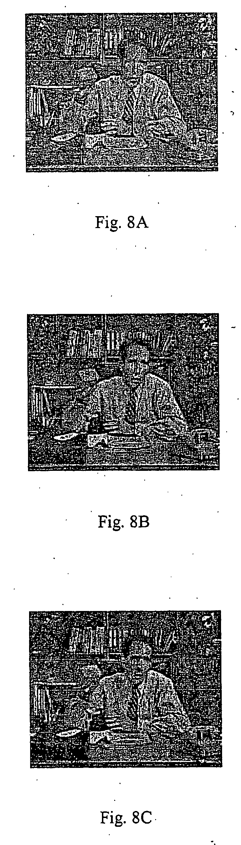

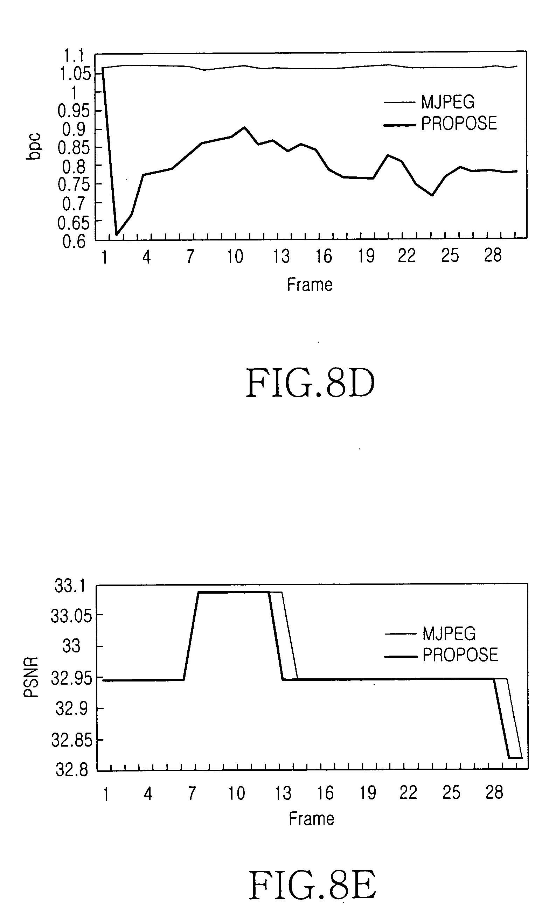

Referring to FIGs. 7A through 7E and 8A through 8E, which are similar to FIGs. 6A through 6E, it should be understood that an image according to an embodiment of the present invention has a lower bit rate than an image having undergone conventional M-JPEG with an approximately identical image quality.

As described above, an embodiment of the present invention uses different compression methods according to the defined type of blocks, thereby reducing the amount of data input into a coder to increase a compression factor and prevent errors from being accumulated. Consequently, there are advantages in that the bit transmission rate is lower, and the amount of calculation and hardware construction is simplified.

While the invention has been shown and described with reference to certain embodiments thereof, it should be understood by those skilled in the art that various changes in form and details may be made therein without departing from the spirit and scope of the invention as defined by the appended claims.

**Claims**

1.  A device for compressing image data, the device comprising:

    a block dividing section for dividing each frame of the image data into a plurality of blocks;

    a block determining section for determining the types of divided blocks; and

    a compressing section for performing a compression according to the types of divided blocks.

2.  The device as claimed in claim 1, wherein the block dividing section divides each frame into 8 pixel by 8 pixel as a block.

3.  The device as claimed in claim 1, wherein, the block determining section comprises a first block determining section for determining whether the block is the refresh block located within the refresh column for preventing errors from being accumulated, a block calculating section for calculating an energy difference between corresponding blocks in two frames when the block is not located within the refresh column, and a second block determining section for determining whether the block is the motion block or the static block by using the energy difference between the blocks.

4.  The device as claimed in claim 3, wherein a location of the refresh column is predetermined in a frame of image data.

5.  The device as claimed in claim 3, wherein the first block determining section determines the block to be either the motion block or the static block when the block is not located within the refresh column.

6.  The device as claimed in claim 1, wherein the compressing section compresses a value of the present block when the present block is determined to be a refresh block through the block determining section.

7.  The device as claimed in claim 1, wherein the compressing section compresses a value of the present block when the present block is determined to be a motion block through the block determining section.

8.  The device as claimed in claim 1, wherein the compressing section compresses a difference between corresponding blocks in two frames when the present block is determined to be a static block through the block determining section.

9.  The device as claimed in claim 1, wherein, the compressing section comprises: a discrete cosine transform (DCT) section for providing 64 DCT functions to the block to convert the block from a spatial region to a frequency range; a quantization section for dividing values of 64 DCT coefficients obtained though the DCT by a quantization coefficient, thereby reducing the number of effective bits; and an entropy coder for coding the quantized DCT coefficients as '0' and '1' according to probability distributions of the quantized DCT coefficients.

10. A method for compressing image data, the method comprising the steps of:

    dividing each frame of received image data into a plurality of blocks;

    determining the types of divided blocks;

    compressing a value of a present block when the present block is determined to be a refresh block;

    compressing a value of a present block when the present block is determined to be a motion block; and

    compressing a difference between corresponding blocks in two frames when the present block is determined to be a static block.

11. The method as claimed in claim 10, wherein the step of determining the type of divided blocks comprises the steps of:

determining whether the divided block is located within a refresh column;

determining the divided block to be a refresh block when the divided block is located within the refresh column; and

determining the divided block to be either a motion block or a static block when the divided block is not located within the refresh column.

12. The method as claimed in claim 11, wherein the step of determining the divided block to be either a motion block or a static block comprises the steps of:

calculating a difference between the blocks;

determining whether the difference between the blocks is more than a predetermined reference value;

determining the divided block to be a motion block when the difference between the blocks is more than the predetermined reference value; and

determining the divided block to be a static block when the difference between the blocks is less than the predetermined reference value.

13. The method as claimed in claim 12, wherein the difference between the blocks represents an energy difference between a block of a present frame and a corresponding block within a previous frame.

EP 1 484 925 A2

100

Motion-JPEG

Video in

| DCT | → | QUANTIZATION | → | ENTROPY CODER |

101　　　　　　　102　　　　　　　103

Bit stream

# FIG.1

FIG.2

EP 1 484 925 A2

FIG.3

Video in → BLOCK DIVIDING SECTION 410

420
Refresh block
Motion block
Static block

1st BLOCK DETERMINING SECTION 421

BLOCK CALCULATING SECTION 422

2nd BLOCK DETERMINING SECTION 423

Motion block
Static block

430
DCT 431
QUANTIZATION 432
ENTROPY CODER 433

Bit stream

FIG.4

START

501
RECEIVE FRAME ? —— NO

YES

DIVIDE INTO
BLOCKS (8X8) ~502

503
BLOCK
LOCATED WITHIN REFRESH —— NO ——
COLUMN ?

YES

505
DIFFERENCE >
REFERENCE VALUE ? —— NO ——

YES

REFRESH BLOCK
(PRESENT BLOCK VALUE) ~504

MOTION BLOCK
(PRESENT BLOCK VALUE) ~506

507
STATIC BLOCK
(DIFFERENCE
BETWEEN BLOCKS)

DCT ~508

QUANTIZING ~509

ENTROPY CODING ~510

511
NO —— LAST BLOCK ?

YES

512
NO —— LAST FRAME ?

YES

END

FIG.5

FIG.6A

FIG.6B

FIG.6C

# FIG.6D

# FIG.6E

EP 1 484 925 A2

Fig. 7A

Fig. 7B

Fig. 7C

15

# FIG.7D

# FIG.7E

Fig. 8A

Fig. 8B

Fig. 8C

FIG.8D

FIG.8E